(19) Europäisches Patentamt / European Patent Office / Office européen des brevets

(11) **EP 3 907 968 A1**

(12) **EUROPEAN PATENT APPLICATION**

(43) Date of publication:
**10.11.2021 Bulletin 2021/45**

(51) Int Cl.:
**H04L 29/06** *(2006.01)* **H04L 9/32** *(2006.01)*

(21) Application number: **21170769.0**

(22) Date of filing: **27.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.05.2020 HK 32020006936**

(71) Applicant: **Foris Technology Pte Ltd**
**04858 Singapore (SG)**

(72) Inventors:
• **YOUNG, Tung Ling Terry**
  **15/F Sai Wan (HK)**
• **CHAN, Matthew David**
  **15/F Sai Wan (HK)**
• **LAU, Jason Wai King**
  **15/F Sai Wan (HK)**
• **NG, Ming Sum Sam**
  **15/F Sai Wan (HK)**
• **TAM, King Yin**
  **15/F Sai Wan (HK)**

(74) Representative: **Iqbal, Md Mash-Hud**
**Marks & Clerk LLP**
**62-68 Hills Road**
**Cambridge CB2 1LA (GB)**

(54) **METHOD AND SYSTEM FOR BLOCKCHAIN INTRUSION PREVENTION**

(57) A method for preventing blockchain intrusion includes the steps of detecting a transaction broadcasted to a blockchain network, determining if the transaction is authorized or unauthorized, and taking a prevention action if the transaction is unauthorized. The proposed system and method are not only adapted to detect unauthorized transactions but they can also cancel unauthorized transactions if the system prepare some data/arrangements in advance.

Fig.1

## Description

### FIELD OF INVENTION

This invention relates to blockchain security, and in particular to systems and methods for detecting and preventing intrusion into a blockchain system.

### BACKGROUND OF INVENTION

A blockchain is a distributed ledger technology that forms a "chain of blocks", where each block includes information and data that are bundled together and verified. The most well-known application of blockchain technology is cryptocurrency, which are tokens used within computer networks to send values and pay for transactions. In the cryptocurrency world, a transaction merely requires a valid digital signature and whoever has the private key that can sign the transaction will be able to use the fund. Therefore, the security and secrecy of the private key is of utmost importance. In conventional technologies, although there have been developed many systems and practices to make sure the private key is secure, cryptocurrency shareholders still demand more security measures to be implemented on their digital assets.

### SUMMARY OF INVENTION

In the light of the foregoing background, it is an objective of the present invention to provide a system to detect unauthorized use of the private key, by detecting unauthorized transactions.

Another objective of the invention is, based on detection of unauthorized transactions, to also cancel the unauthorized transactions.

The above objective is met by the combination of features of the main claim; the sub-claims disclose further advantageous embodiments of the invention.

One skilled in the art will derive from the following description other objectives of the invention. Therefore, the foregoing statements of objectives are not exhaustive and serve merely to illustrate some of the many objectives of the present invention.

Accordingly, the present invention, in one aspect, is a method for preventing blockchain intrusion. The method comprises the steps of detecting a transaction broadcasted to a blockchain network, determining if the transaction is authorized or unauthorized, and taking a prevention action if the transaction is unauthorized.

Preferably, the prevention action contains the step of canceling the transaction by a prevention device.

More preferably, the transaction was created with a time delay such that the transaction is effective only after the time delay since when the transaction was broadcasted. The canceling step is performed by the prevention device during the period of time delay.

According to a variation of the preferred embodiments, the transaction was created with use of a smart contract, and the canceling step is performed by the prevention device using an auditor key.

Alternatively, the canceling step further contains sending a pre-signed cancelation message (PSCM) to the blockchain network by the prevention device.

Preferably, the pre-signed cancelation message is created at the same time when an Unspent Transaction Output (UTXO) that is required by the transaction is created; the pre-signed cancelation message paired with the UTXO.

According to another variation of the preferred embodiments, the determining step includes checking the transaction against records in a database.

According to a further variation of the preferred embodiments, the determining step includes checking authenticity of the transaction based on one or more of the following criteria: whether the transaction amount of a transaction requested by a user reaches a limit per user per day; whether the systemwide total transaction amount reaches a limit per system per hour; whether an arrival rate of withdrawal requests from a user requesting the transaction reaches a threshold; and whether a proximity of an address to one or more hacker-controlled address in a transaction to or from a user reaches a threshold.

In one implementation, the prevention action includes sending an alert to the asset owner and/or a system administrator.

According to another aspect of the invention, a system is provided for preventing blockchain intrusion. The system includes a first wallet device adapted to connect to a blockchain network; and a prevention device connected to the first wallet device. The prevention device is configured to detect a transaction broadcasted to the blockchain network that involves the first wallet device, determine whether the transaction is authorized or unauthorized, and take a prevention action if the transaction is unauthorized.

Preferably, the prevention action includes canceling the transaction by the prevention device.

More preferably, the transaction was created with a time delay such that the transaction is effective only after the time delay since when the transaction was broadcasted. The prevention device is adapted to cancel the transaction during a period of the time delay.

According to a variation of the preferred embodiments, the transaction was created with use of a smart contract, and the prevention device is adapted to cancel the transaction using an auditor key.

Alternatively, the prevention device is adapted to send a pre-signed cancelation message to the blockchain network.

Preferably, the pre-signed cancelation message is created at the same time when a UTXO that is required by the transaction is created; the pre-signed cancelation message paired with the UTXO.

More preferably, the system contains further a second wallet device connected to the first wallet device. The second wallet device is adapted to generate the UTXO while the first wallet device is adapted to generate the pre-signed cancelation message paired with the UTXO.

According to another variation of the preferred embodiments, the system further contains a database connected to the first wallet device. The prevention device is adapted to check the transaction against records in the database.

According to a further variation of the preferred embodiments, the prevention device is adapted to check authenticity of the transaction based on one or more of the following criteria: whether the transaction amount of a transaction requested by a user reaches a limit per user per day; whether the systemwide total transaction amount reaches a limit per system per hour; whether an arrival rate of withdrawal requests from a user requesting the transaction reaches a threshold; and whether a proximity of an address to one or more hacker-controlled address in a transaction to or from a user reaches a threshold.

In one implementation, the prevention action includes sending an alert to the asset owner and/or a system administrator.

The invention therefore provides systems and methods capable of detecting misuse or unauthorized use of a private key by monitoring all broadcasted blockchain transactions over the blockchain network. Furthermore, the systems and methods are capable of taking prevention actions, such as canceling an unauthorized transaction when it is found. Therefore, even if the private key is leaked and for example became known to a hacker, any attempt to make transactions using the leaked key over the blockchain network will be detected and prevented by the prevention device, so that there will be no loss caused to the actual owner of the asset. The invention therefore provides a greatly enhanced security measure against unauthorized, fraudulent or illegal transactions as a beneficial supplement to traditional solutions which focus on the protection of the private key *per se* (e.g. by using an HSM (Hardware Security Module)).

The checking of whether a transaction is authorized or not in the invention is accurate, such that the probability of misclassifying a transaction is minimized. This is achieved by using multi-prone means to judge the transaction. Firstly, the transaction is reconciled against a trusted database, e.g. financial records of a corporate, so that authenticity of the transaction can be determined in a precise way. Furthermore, as an alternative or in addition, unauthorized transactions can be detected by checking conditions that authorized transactions would never violate, such as transaction amount limits per user per day, systemwide transaction amount limits per system per hour, arrival rate of withdrawal requests from a user, deposits from or withdrawals to known hacker-controlled addresses, etc. The concept is further extended to extract these so-called "features" and feed it into a predictive classification model.

In terms of security, the systems and methods proposed in the invention are more improved than conventional methods. For example, it is a well-known technique to cancel an already broadcasted, but not yet confirmed, transaction by double-spending it and to cancel the transaction with a higher fee. However, in such conventional art, the system needs to use the same hot-wallet key to re-sign another message, and when the private key is compromised, the expected behavior of the hot-wallet can no longer be guaranteed. In comparison, some embodiments of the invention that use "delayed" smart contract case provide a much better solution than double-spending. Even if the auditor key that is used by the prevention device is compromised, it does not cause too much damage, as the auditor key can be rotated by the master key if necessary. On the other hand, for the case of blockchain networks that do not support smart contracts, some embodiments of the invention which use PSCM are still better than plain double-spending because the prevention device will receive one or more PSCMs when the hot-wallet receives a UTXO to which the PSCMs correspond to, not when the hot-wallet spends it. Therefore, these embodiments of the invention are one step ahead of conventional solutions, and this one single step is important. For example, if the hot-wallet fails to provide the PSCM, the prevention device can immediately lock down the hot-wallet to prevent the hot-wallet from spending the UTXO that the PSCM corresponds to.

## BRIEF DESCRIPTION OF FIGURES

The foregoing and further features of the present invention will be apparent from the following description of preferred embodiments which are provided by way of example only in connection with the accompanying figures, of which:

Fig. 1 is a high-level illustration of a system which contains a prevention device connected to blockchain networks, according to one embodiment of the invention.

Fig. 2 shows the system of blockchain intrusion prevention according to another embodiment of the invention.

Fig. 3 is a flowchart showing how the prevention device in Fig. 2 functions to detect and prevent unauthorized transactions.

Fig. 4 shows the system of blockchain intrusion prevention according to a further embodiment of the invention.

Fig. 5 is a flowchart showing how the prevention device in Fig. 4 functions to detect and prevent unauthorized transactions.

Fig. 6 is a schematic diagram illustrating the principle of calculating "proximity to hacker-controller addresses".

In the drawings, like numerals indicate like parts throughout the several embodiments described herein.

## DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

As used herein and in the claims, "device" or "component" refers to any instruction execution apparatus such as a computer/processor based system, a computing device, or a hardware and/or software system that can fetch or obtain the logic from a non-transitory storage medium or a non-transitory computer-readable storage medium and execute the instructions contained therein. "Device" or "component" can also include any software-based instruction execution module, such as a sub-set of a software bundle, cloud-based utility, service or feature, or any other virtual function block that is not tied to a particular hardware.

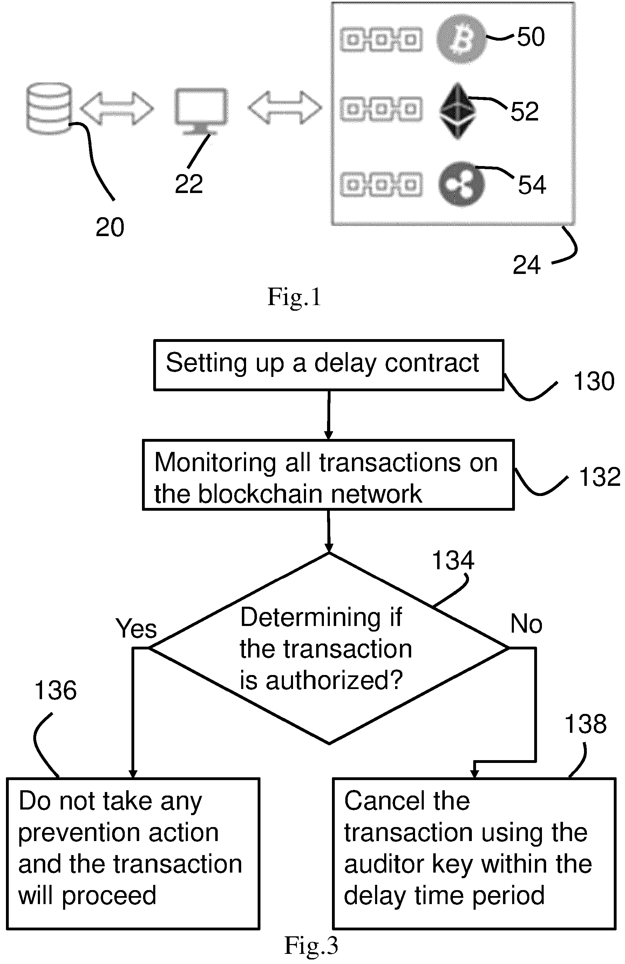

Referring now to Fig. 1, the first embodiment of the present invention is a system that is adapted to detect unauthorized transactions, and optionally to prevent such transactions from taking place, over a blockchain network for cryptocurrency. The system includes a prevention device 22, which is connected to a database 20 that contains financial records of an asset owner (not shown) such as a corporate, and also to blockchain network(s) 24. Note that the prevention device 22 is adapted to connect to and protect one, or more than one of blockchain network(s) 24 such as those shown in Fig. 1, where the three exemplary blockchain networks are Bitcoin (BTC) 50, Ethereum (ETH) 52 and Ripple (XRP) 54. The database 20 is an independent database from the distributed ledger database provided as a nature of the blockchain network(s) 24. The financial records in the database 20 are therefore independent from the blockchain network(s) 24 and are immutable, which can be considered as an audit trail or the single point of truth for the system. The asset owner is the party that holds the cryptocurrency as digital assets, where the prevention device 22 is intended to protect the interest of the asset owner and/or the normal operation of the entire blockchain network(s) 24.

The prevention device 22 is adapted to detect unauthorized use of private keys by monitoring all broadcasted blockchain transactions over the blockchain network(s) 24. During operation of the system shown in Fig. 1, after detecting that a transaction is broadcasted, the prevention device 22 then determines whether the transaction is authorized or not. One of the determining methods used by the prevention device 22 is to reconcile the detected transaction against the financial records in the database 20. If the prevention device 22 detects a withdrawal transaction from the blockchain network(s) 24, it then checks against the financial records. If a withdrawal record is also found in the financial records, with the correct transaction detail information such as the buyer/seller address and the amount, it will be considered as an authorized (valid) transaction. Otherwise, if the withdrawal record cannot find any matched ones in the financial records, then the prevention device 22 will take a prevention action, which for example includes sending out an alert to the asset owner and/or the system administrator (both not shown), and/or attempting to cancel the transaction. Similarly, if the prevention device 22 detects a deposit transaction from the financial records, it then checks against the blockchain network(s) 24. If a deposit transaction is also found in a corresponding blockchain network among the blockchain network(s) 24, with the correct transaction detail information such as the buyer/seller address and the amount, it will be considered as a valid transaction. Otherwise, if the deposit transaction cannot find any matched ones in the financial records, then the prevention device 22 will take a prevention action for example by sending out an alert to notify the asset owner and/or a system administrator. Obviously, for this case, it is not possible to cancel the transaction because there is no transaction to cancel. This is because there is a missing transaction that is needed to complete the deposit, which should be made by another party on the blockchain network(s) 24, and the financial records only "know" that there will be a deposit but do not make the deposit transaction itself.

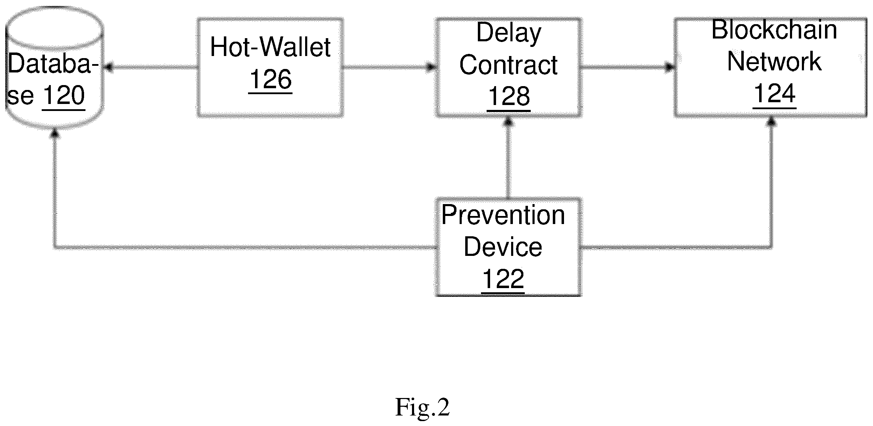

Turning now to Fig. 2, which shows a system for preventing blockchain intrusion according to another embodiment of the invention. The system in Fig. 2 can be considered as a specific implementation of the high-level system in Fig. 1, although it is not the only way to implement the high-level system in Fig. 1. In Fig. 2, a prevention device 122 also connects to both a blockchain network 124 and a database 120, and the functions of these components are similar to those in Fig. 1 as described above. As shown in Fig. 2, there is further a hot-wallet 126 which as skilled persons would understand is a cryptocurrency wallet of the asset owner that is connected to the blockchain network 124 and allows quick and immediate access to the digital assets of the asset owner. When performing a withdrawal transaction, the hot-wallet 126 is adapted to prepare the data, sign the data and then broadcast it to the blockchain network 124. The signed data is then sent to a pool of unconfirmed data, and waits to be confirmed by some miners or validators over the corresponding blockchain network who will collect and group multiple valid transactions into a "block", and then perform some cryptographic computation on top of it (e.g. computing a hash, performing a group signature, etc.). The "payer" from which the withdrawal is made, which is the asset owner, usually needs to pay a transaction fee, a.k.a. "gas", and miners/validators are incentivized to pick transactions with higher "gas". The above working principles of the withdrawal transaction between a hot-wallet and the blockchain network is well-known to those skilled in the art and will not be described in more details. It should be noted that for all authorized transactions in relation to the hot-wallet **126,** the instructions to carry out come from the financial records in the database **120,** or other internal sub-systems (not shown) separate from the blockchain network **124** with data then be written to the financial records.

One essential feature in the system in Fig. 2 is the use of a delay contract **128** on the basis of smart contracts which the blockchain network **124** supports. As skilled persons would understand, a smart contract is a self-enforcing agreement embedded in computer code managed by a blockchain. The code contains a set of rules under which the parties of that smart contract agree to interact with each other. If and when the predefined rules are met, the agreement is automatically enforced. In the embodiment in Fig. 2, the delay contract **128** is designed based on the general concept of smart contracts, and the delay contract **128** is written in a way that within a predetermined delayed time period, user(s) with a special private key can cancel the transaction. Such special private key is also referred to as an auditor key herein. The transaction will be performed as expected if no cancelation is received within the delayed time period. Also, the auditor key can only be used to cancel any transaction but cannot be used to initiate or create a transaction. In the system of Fig. 2, the prevention device **122** holds the auditor key.

Turning to the method of preventing intrusion on the blockchain network using the system in Fig. 2, Fig. 3 shows a flowchart on how the prevention system detects an unauthorized transaction and takes prevention action(s). Starting from Step **130,** in order for the cancelation mechanism of transactions to work, an additional setup needs to be done before the system starts to detect transactions over the network, which is to set up the delay contract **128.** The delay contract **128** is created by the asset owner as a smart contract, and in particular the delay contract **128** is configured to delay all transactions that involve funds stored in the delay contract **128** for a predetermined time period, for example 3 minutes. Such a time delay applies no matter where the transaction is generated from, and as long as the transaction has to go through the delay contract **128** the time delay will apply mandatorily.

Next, with the delay contract **128** set up, in Step **132** the prevention device **122** starts to monitor for all transactions broadcasted to the blockchain network **124.**

This is possible because all transactions are public on the blockchain network **124** so any node / peer therein could know about all broadcasted transactions. After identifying a transaction that involves the hot-wallet **126,** the prevention device **122** in Step **134** then determines whether the transaction is authorized or not. This is done by the prevention device **122** checking the transaction against the financial records in the database **120** in a way similar to what is described above in Fig. 1. Following the determination of the nature of the transaction, the method then proceeds to either Step **136** or Step **138.** If in Step **134** it is found that the transaction is authorized, then in Step **136** the prevention device **122** does not take any prevention action, and as a result the transaction can proceed as expected after the specified time delay. On the contrary, if in Step **134** it is found that the transaction is unauthorized, then in Step **138** the prevention device **122** cancels the transaction within the predetermined delay time period (e.g. 3 minutes), since the prevention device **122** has the auditor key and is able to take the canceling step. The cancelation of the transaction prevents any loss from being made to the asset owner of the hot-wallet **126.** Note that in addition to or alternative to the cancelation action, the prevention device **122** may also take other prevention actions including sending an alert to the asset owner and/or a system administrator of the present invention.

It should be noted that the auditor key owned by the prevention device **122** is not unique or permanent, but it can be updated/modified by another master key. However, since the operation to replace an old or stolen auditor key by using the master key rarely happens, such operation should only be conducted manually, and the master key should be held in a hardware token which is commonly considered as highly secure. With the mechanism of the master key, even if the auditor key is leaked, there will be no loss to the asset owner, because leaking the auditor key will result in Denial-of-Service for a short period of time, until the system administrator uses the master key to change the auditor key.

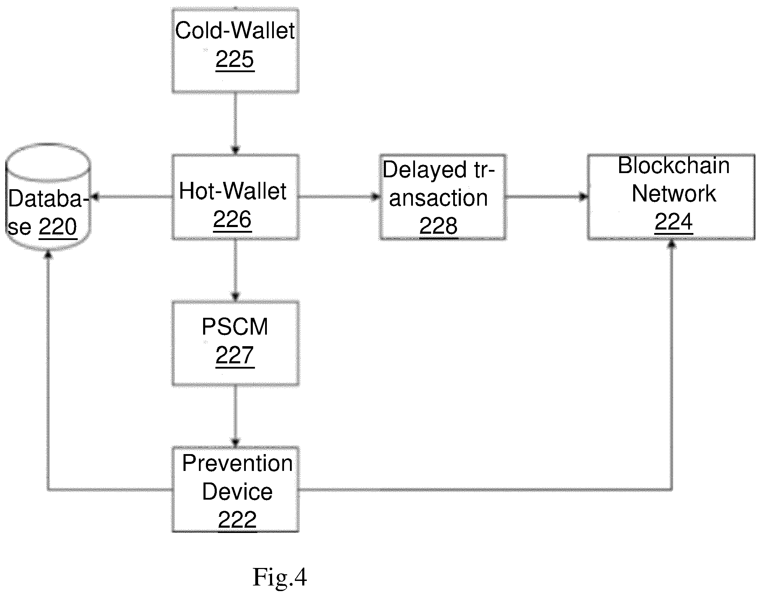

Turning to Fig. 4, which shows another embodiment of the invention that is a system for preventing blockchain intrusion. The system in Fig. 4 can be considered as a specific implementation of the high-level system in Fig. 1, just like that in Fig. 2, but the system in Fig. 4 is an alternative way to implement the high-level system in Fig. 1. In particular, the blockchain network **224** does not support smart contract, so an alternative way to cancel unauthorized transactions is used by a prevention device **222** which connects to both the blockchain network **224** and a database **220.** A hot-wallet **226** is connected to the database **220** and the prevention device **222.** The general functions of these parts in Fig. 4 are similar to those in Fig. 2, and will not be described in further details for the sake of brevity. A cold-wallet **225** is connected to the hot-wallet **226.**

The difference between the system in Fig. 4 as compared to that in Fig. 2 is that in cases where smart contracts are not supported on specific blockchain networks **224,** the system in Fig. 4 makes use of time-delay transactions **228,** and also the PSCMs **227.** In particular, the system in Fig. 4 is most suitable for blockchain networks that supports UTXO but does not support smart contracts. All withdrawal transactions from the hot-wallet **226** are time-delayed transactions **228,** and one example for the time-delayed transactions **228** is the CheckLock-TimeVerify opcode in Bitcoin. The time-delayed transactions **228** are preferably only valid for a certain period of time (e.g. 3 minutes), although this is not a strict requirement for implementing this embodiment of the invention. If there is no time delay associated with the transactions, while theoretically a prevention device **222** is still able to cancel it within the time needed for calculating the block for this transaction (based on the fundamental principle of blockchain technology), the block time may be too short for the prevention device **222** to perform any cancelation without a delay if the block time is extremely short such as a few blocks per second, when there are abundant computational power available on the blockchain network. On the other hand, although a hacker with the private key of the hot-wallet **226** in hand can broadcast a transaction without any time delay, the time delay property is still useful in two ways. Firstly, absence of the time delay property of any transaction is itself an indication of transactions being unauthorized. Secondly, loss of the hot-wallet private key is not the only root cause of unauthorized transactions. If the unauthorized transaction is due to other logic flaws, such as a race condition, the prevention device **222** can still detect it and cancel/correct the mistake.

Corresponding to every time-delayed transaction **228,** a PSCM **227** created using the same UTXO as the time-delayed transaction **228** is passed to the auditor (which is the prevention device **222** in this case) in advance. The prevention device **222** is then adapted to cancel a transaction by broadcasting its corresponding PSCM **227** to the blockchain network **224** when needed. If the "gas" is set to an appropriate value, miners (not shown) on the blockchain network **224** will favor the PSCM **227** over the time-delayed transaction **228** which in this case may be unauthorized. In particular, since a UTXO can only be spent once, two transactions spending the same UTXO will compete with each other, and miners on the blockchain network **224** are incentivized to pick the one with higher gas, and be able to receive the "gas" sooner. Obviously, this is a probabilistic activity, and there is no guarantee that the PSCM **227** will be picked by the miners rather than the delayed transaction **228** which is unauthorized. However, in general, especially if the hacker does not know the existence of the prevention device **222,** the chances of being able to cancel the transaction should be relatively high. The chance is further enlarged by generating more than one PSCM **227** for each transaction **228** as will be discussed in more details below. Note that the destination address of all PSCM **227** is to the address of the cold-wallet **225** which is safe, and not to the prevention device **222.** Therefore, it is relatively safe even if the address of the cold-wallet **225** is leaked.

The generation of the PSCM **227** is briefly described now. With reference to Fig. 4, when the hot-wallet **226** receives fund from the cold-wallet **225,** the hot-wallet **226** needs to generate an initial PSCM **227** on the received UTXO (not shown) associated with the fund, and pass it to the prevention device **222** in a secure channel. The PSCM **227** and the UTXO are thus paired. If there are multiple UTXOs, then each UTXO needs to be paired with at least one PSCM **227. The** hot-wallet **226** may also prepare several PSCMs **227** for the same UTXO, each with a different "gas" price, so that when performing the cancelation, one PSCM **227** may be beaten by the unauthorized transaction **228** because the "gas" of this PSCM **227** is too low, but other PSCM **227** with a higher gas price may instead be favored by miners over the unauthorized transaction **228.** It is an indication of intrusion too, if the hot-wallet **226** fails to provide PSCMs **227** to the prevention device **222** because the hot-wallet **226** may have been compromised.

Another circumstance in which a UTXO may be generated is when the hot-wallet **226** spends the initial UTXO provided by the cold-wallet **225** and when the hot-wallet **226** receives some "changes", i.e. residue value back to itself. For the purpose of explanation, suppose that the cold-wallet **225** gives the hot-wallet **226** a $100 dollar note, the hot-wallet **226** then gives $40 to user A and $50 to user B (both not shown) and gets a $10 dollar note as the change. When the hot-wallet **226** is creating this transaction, it needs to prepare another PSCM **227** for the received $10 because of the ledger nature of blockchain technology, and share the other PSCM **227** with the prevention device **222.** Again, failure to do so by the hot-wallet **226** is considered as an indication of intrusion.

In summary, each time the hot-wallet **226** receives a UTXO, it needs to prepare one or more PSCMs **227,** no matter if this is the result of cold-wallet **225** being top-upped, or the result of a "change" of funds in the hot-wallet **226.** In other words, each received UTXO needs to be paired with one or more PSCMs **227,** and to cancel a transaction that uses a UTXO, the prevention device **222** just needs to broadcast the corresponding one or more of these PSCMs **227** to the UTXO to the blockchain network **224.** If a transaction uses more than one UTXO, then PSCMs **227** paired with one or more of these UTXOs may be sent. Such a configuration ensures that the prevention device **222** will be able to take cancelation actions if any part of the funds (i.e. UTXOs) in the hot-wallet **226** is requested to be withdrawn by an unauthorized transaction **228.**

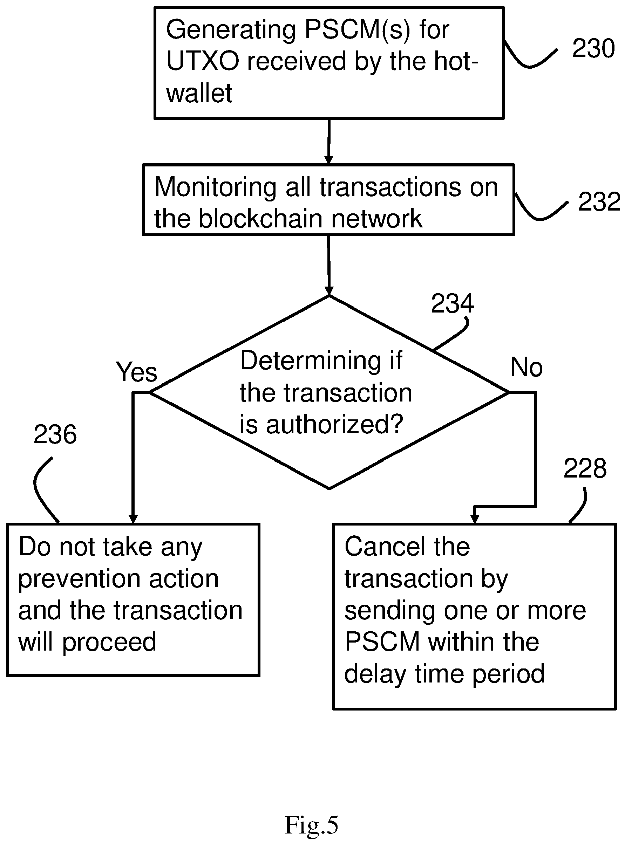

Turning to the method of preventing intrusion on the blockchain network using the system in Fig. 4, Fig. 5 shows a flowchart on how the prevention system detects an unauthorized transaction and takes prevention action(s). Starting from Step **230,** in order for the cancelation mechanism of transactions to work, an additional setup needs to be done before the system starts to detect transactions over the network, which is to generate PSCMs **227** for all initial UTXOs received by the hot-wallet **266.** Any withdrawal transaction attempting to withdraw the asset from the hot-wallet **266** then requires the spending of at least one of these initial UTXOs, although there may be changes given back to the hot-wallet **266** as previously mentioned. The generated PSCMs **227** are then sent to the prevention device **222** by the hot-wallet **226** securely as mentioned above, so that the prevention device **222** can send out these PSCMs **227** to cancel transaction(s) when necessary. Next, once the PSCMs **227** are ready, in Step **232** the prevention device **222** starts to monitor for all transactions broadcasted to the blockchain network **224**. The prevention device **222** will conduct further analysis on a transaction if it is related to the asset owner of the hot-wallet **226** and cold-wallet **225,** as apparently the particular prevention device **222** is not interested in transactions on the blockchain network **224** that do not involve the hot-wallet **226** (which nonetheless can be manipulated by other similar prevention devices on the network). The prevention device **222** in particular will analyze any transaction that requires the use of any UTXO stored in the hot-wallet **226.**

After identifying a transaction, the prevention device **222** in Step **234** then determines whether the transaction is authorized or not. This is done by the prevention device **222** checking the transaction against the financial records in the database **220** in a way similar to what is described above in Fig. 1. Following the determination of the nature of the transaction, the method then proceeds to either Step **236** or Step **238**. If in Step **234** it is found that the transaction is authorized, then in Step **236** the prevention device **222** does not take any prevention action, and as a result the transaction can proceed as expected after the specified time delay. On the contrary, if in Step **234** it is found that the transaction is unauthorized, then in Step **238** the prevention device **222** cancels the transaction within the predetermined delay time period associated with the transaction, by sending out one or more PSCMs **227** that correspond to UTXO(s) involved in the transaction. The cancelation of the transaction prevents any loss from being made to the asset owner of the hot-wallet **226**. Note that in addition to or alternative to the cancelation action, the prevention device **222** may also take other prevention actions including sending an alert to the asset owner and/or a system administrator of the present invention.

In the embodiments described above for Fig. 2 and Fig. 4, when the prevention device determines whether a transaction is authorized, the check was made by comparing the transaction with financial records in a database, as the financial records can be considered as an audit trail or the single point of truth. However, there are some other information that the BIPS can use to determine if a transaction "looks" legitimate or not, which may be used instead of, or injunction with, the checking in financial records. For example, the system may have a withdrawal limit and therefore the prevention device is not expected to see any withdrawal larger than a certain value. The following shows some other properties, but not limited to these, that can be used to detect the authenticity of a transaction: whether the transaction amount of a transaction requested by a user reaches a per user per day; whether the systemwide total transaction amount reaches a limit per system per hour; whether an arrival rate of withdrawal requests from a user requesting the transaction reaches a threshold; and whether a proximity of an address to one or more hacker-controlled address in a transaction to or from a user reaches a threshold.

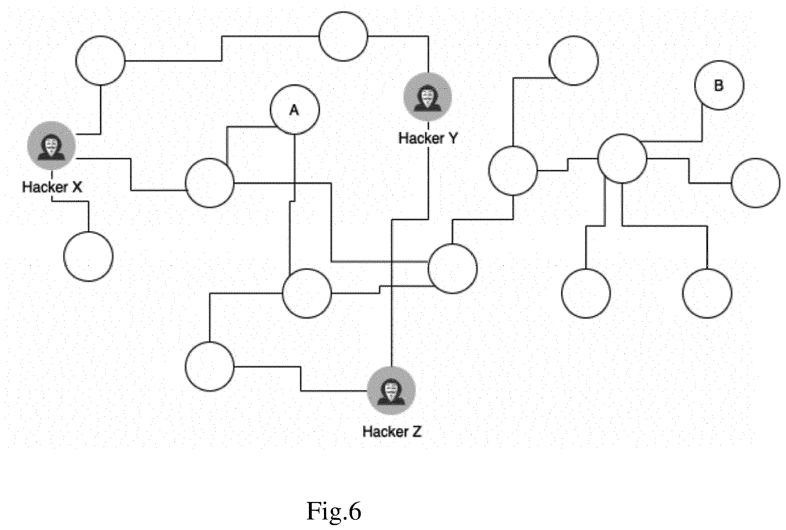

Fig. 6 shows one example on how to calculate the "proximity to hacker-controlled addresses", which is abbreviated as a PHCA value. Provided as an example, one equation that may be used to calculate the PHCA is as follows:

$$PHCA = \sum_{all\ hackers} 2^{-d}$$

where d is the degree of connectivity from the destination address to the hacker.

For example, in Fig. 6 address A is 1 degree connected to Hacker X and 3 degrees connected to Hacker Y, and therefore the PHCA is $2^{-2} + 2^{-3} = 0.375$.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

It is to be understood that, if any prior art publication is referred to herein, such reference does not constitute an admission that the publication forms a part of the common general knowledge in the art, in Australia or any other country.

The embodiments described above with references to Figs. 1-5 use two different approaches to cancel a transaction. However, it should be noted that the invention is not limited to these two methods. Any other approach to cancel a broadcasted transaction in the blockchain network effectively to avoid loss to the asset owner may also be used and still falls within the scope of the invention, since the invention is more generally related to the detecting and determining of unauthorized transactions, and taking prevention actions.

Furthermore, it should be noted the above embodiments are described using blockchain networks for cryptocurrency. Those skilled in the art should realize that the application of the invention is not limited to cryptocurrency, but any other industrial application based on the use of blockchain technology can benefit from the invention to prevent unauthorized transactions in the networks.

The embodiments shown in Fig. 2 and 4 contain only one blockchain network which is used as an example to explain the cancelation of transactions by the prevention device. However, it should be noted that a single prevention device certainly could be used for more than one type of blockchain networks simultaneously, provided that the prevention device can process the protocols for these blockchain networks and are connected into these networks.

## Claims

1. A method for preventing blockchain intrusion, comprising the steps of:

    a) detecting a transaction broadcasted to a blockchain network;
    b) determining if the transaction is authorized or unauthorized; and
    c) taking a prevention action if the transaction is unauthorized.

2. The method of claim 1, wherein the prevention action comprises the step of canceling the transaction by a prevention device; and
preferably, the transaction was created with a time delay such that the transaction is effective only after the time delay since when the transaction was broadcasted, and the canceling step is performed by the prevention device during a period of the time delay.

3. The method of claim 2, wherein the transaction was created with use of a smart contract, and the canceling step is performed by the prevention device using an auditor key.

4. The method of claim 2, wherein the canceling step further comprises sending a pre-signed cancelation message to the blockchain network by the prevention device.

5. The method of claim 4, wherein the pre-signed cancelation message is created at the same time when a UTXO that is required by the transaction is created; the pre-signed cancelation message paired with the UTXO.

6. The method of any one of the preceding claims, wherein the determining step comprises checking the transaction against records in a database;
OR the determining step comprises checking authenticity of the transaction based on one or more of the following criteria:

    a) whether a transaction amount of a user requesting the transaction reaches a limit per user per day;
    b) whether the systemwide total transaction amount reaches a limit per system per hour;
    c) whether an arrival rate of withdrawal requests from a user requesting the transaction reaches a threshold; and
    d) whether a proximity of an address to one or more hacker-controlled address in a transaction to or from a user reaches a threshold.

7. The method of any one of the preceding claims, wherein the prevention action comprises sending an alert to the asset owner and/or a system administrator.

8. A system for preventing blockchain intrusion, comprising:

    a) a first wallet device adapted to connect to a blockchain network; and
    b) a prevention device connected to the first wallet device;

wherein the prevention device is configured to detect a transaction broadcasted to the blockchain network that involves the first wallet device, determine whether the transaction is authorized or unauthorized, and take a prevention action if the transaction is unauthorized.

9. The system of claim 8, wherein the prevention action comprises canceling the transaction by the prevention device; and
preferably, the transaction was created with a time delay such that the transaction is effective only after the time delay since when the transaction was broadcasted; the prevention device adapted to cancel the transaction during a period of the time delay.

10. The system of claim 9, wherein the transaction was created with use of a smart contract, and the prevention device is adapted to cancel the transaction using an auditor key.

**11.** The system of claim 9, wherein the prevention device is adapted to send a pre-signed cancelation message to the blockchain network.

**12.** The system of claim 11, wherein the pre-signed cancelation message is created at the same time when a UTXO that is required by the transaction is created; the pre-signed cancelation message paired with the UTXO.

**13.** The system of claim 12, further comprises a second wallet device connected to the first wallet device; the second wallet device adapted to generate the UTXO while the first wallet device adapted to generate the pre-signed cancelation message paired with the UTXO.

**14.** The system of any one of claims 10-13, further comprises a database connected to the first wallet device; the prevention device adapted to check the transaction against records in the database;
OR wherein the prevention device is adapted to check authenticity of the transaction based on one or more of the following criteria:

> a) whether a transaction amount of a user requesting the transaction reaches a limit per user per day;
> b) whether the systemwide total transaction amount reaches a limit per system per hour;
> c) whether an arrival rate of withdrawal requests from a user requesting the transaction reaches a threshold; and
> d) whether a proximity of an address to one or more hacker-controlled address in a transaction to or from a user reaches a threshold.

**15.** The system of any one of claims 10-14, wherein the prevention action comprises sending an alert to the asset owner and/or a system administrator.

50

52

54

24

20

22

Fig.1

| Setting up a delay contract | 130 |

Monitoring all transactions on the blockchain network 132

134

Determining if the transaction is authorized?

Yes

No

136

138

Do not take any prevention action and the transaction will proceed

Cancel the transaction using the auditor key within the delay time period

Fig.3

Fig.2

EP 3 907 968 A1

EP 3 907 968 A1

```
                    ┌──────────────┐
                    │ Cold-Wallet  │
                    │     225      │
                    └──────┬───────┘
                           │
                           ▼
┌──────────┐        ┌──────────────┐        ┌──────────────┐        ┌──────────────┐
│Databa-   │◄───────│  Hot-Wallet  │───────►│ Delayed tr-  │───────►│  Blockchain  │
│se 220    │        │     226      │        │  ansaction   │        │   Network    │
│          │        │              │        │     228      │        │     224      │
└──────────┘        └──────┬───────┘        └──────────────┘        └──────────────┘
     ▲                     │                                                ▲
     │                     ▼                                                │
     │              ┌──────────────┐                                        │
     │              │     PSCM     │                                        │
     │              │     227      │                                        │
     │              └──────┬───────┘                                        │
     │                     │                                                │
     │                     ▼                                                │
     │              ┌──────────────┐                                        │
     │              │  Prevention  │                                        │
     └──────────────│    Device    │────────────────────────────────────────┘
                    │     222      │
                    └──────────────┘
```

Fig.4

Generating PSCM(s) for UTXO received by the hot-wallet `230`

Monitoring all transactions on the blockchain network `232`

Determining if the transaction is authorized? `234`

Yes

No

`236` Do not take any prevention action and the transaction will proceed

`228` Cancel the transaction by sending one or more PSCM within the delay time period

Fig.5

Fig.6

Europäisches
Patentamt

European
Patent Office

Office européen
des brevets

## EUROPEAN SEARCH REPORT

Application Number

EP 21 17 0769

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 540 654 B1 (JAMES DANIEL WILLIAM HALLEY [US] ET AL) 21 January 2020 (2020-01-21) | 1-3, 6-10,14, 15 | INV. H04L29/06 H04L9/32 |
| Y | * column 54, lines 9-27 * | 4,5, 11-13 | |
| X | US 2018/240107 A1 (ANDRADE MARCUS [US]) 23 August 2018 (2018-08-23) | 1-3, 6-10,14, 15 | |
| Y | * paragraphs [0222], [0321] * | 4,5, 11-13 | |
| Y | EP 3 396 608 A1 (BLOCKSETTLE AB [SE]) 31 October 2018 (2018-10-31) * paragraphs [0135], [0165] * | 4,5, 11-13 | |

TECHNICAL FIELDS
SEARCHED       (IPC)

H04L

The present search report has been drawn up for all claims

| Place of search | Date of completion of the search | Examiner |
|---|---|---|
| Munich | 21 September 2021 | Manet, Pascal |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 17 0769

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2021

| Patent document cited in search report | | Publication date | Patent family member(s) | | Publication date |
|---|---|---|---|---|---|
| US 10540654 | B1 | 21-01-2020 | NONE | | |
| US 2018240107 | A1 | 23-08-2018 | NONE | | |
| EP 3396608 | A1 | 31-10-2018 | EP 3396608 A1 | | 31-10-2018 |
| | | | US 2020193432 A1 | | 18-06-2020 |
| | | | WO 2018197491 A1 | | 01-11-2018 |

EPO FORM P0459

For more details about this annex : see Official Journal of the European Patent Office, No. 12/82